(19) Europäisches Patentamt / European Patent Office / Office européen des brevets

(11) **EP 4 613 798 A1**

(12) **EUROPEAN PATENT APPLICATION**

(43) Date of publication:
**10.09.2025 Bulletin 2025/37**

(21) Application number: **24162427.9**

(22) Date of filing: **08.03.2024**

(51) International Patent Classification (IPC):
**C08J 5/18** (2006.01)     **C08L 29/14** (2006.01)

(52) Cooperative Patent Classification (CPC):
(C-Sets available)
**C08J 5/18; C08F 216/38; C08L 29/14;** B29C 48/08;
B32B 17/10761; C08F 8/28; C08F 2810/20;
C08J 2329/14; C08L 2205/025          (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Kuraray Europe GmbH 65795 Hattersheim am Main (DE)**

(72) Inventors:
• **Haerth, Michael
  Leinach (DE)**
• **Lomnitz, Stephan
  Troisdorf (DE)**

(74) Representative: **Janßen, Christian Oliver Kuraray Europe GmbH Phillip-Reis-Straße 4 65795 Hattersheim (DE)**

(54) **PROCESS FOR THE PREPARATION OF POLYVINYL ACETAL FILMS WITH LESS DRAW RESONANCE**

(57)     The present invention relates to a process for the preparation of polyvinyl acetal films with less draw resonance as well as to polyvinyl acetal films prepared in such processes with less optical flaws.

Figure 1: Tensile Force F as a function of draw ratio DR.

(52) Cooperative Patent Classification (CPC): (Cont.)

C-Sets
**C08F 216/38, C08F 216/06, C08F 218/08;**
**C08L 29/14, C08L 29/14**

**Description**

The present invention relates to a process for the preparation of polyvinyl acetal films with less draw resonance as well as to polyvinyl acetal films prepared in such processes with less optical flaws.

In the realm of polymer processing, melt extrusion of polyvinyl acetals like polyvinyl butyral (PVB) stands out as a crucial manufacturing process, particularly in the production of laminated safety glass and other specialty applications. However, the efficiency and quality of this process can be compromised by a phenomenon known as draw resonance. Draw resonance refers to the undesired oscillations and fluctuations in the extruded PVB material, leading to non-uniformities and diminished product performance.

Efforts to mitigate draw resonance during the melt extrusion of PVB have been ongoing, with existing solutions often falling short in achieving consistent and high-quality results. Especially for optical applications there is still a need for better quality PVB films with less optical flaws. Such optical applications are disclosed, for example, in US20210078299A1, where a thin, non-plasticized PVB film is used in the camera area of a windshield. It becomes apparent that any flaws in the PVB films in this area could potentially compromise the safety of the passengers, e.g. in case of self-driving vehicles.

As the phenomenon of draw resonance is closely linked to the molecular structure and therefore to the viscosity of the polymer melt during extrusion, another possible solution would be to reduce this viscosity. To this end, the temperature of the melt could be increased. However, higher temperatures generally lead to higher degradation of the polymer, leading again to an increased yellowness as well as the generation of fine particles and thus, a decrease in optical quality.

Alternatively, a polyvinyl acetal with a low viscosity could be employed. However, the use of such low-viscosity polyvinyl acetals leads to unsatisfactory results in the safety tests of the glass laminates, e.g. in ball drop tests.

The use of plasticizer could also lower the viscosity. However, for applications in which the polyvinyl acetal film needs to be functionalized, e.g. by printing, coating or sputtering onto at least one surface of the film, a more rigid, i.e. non-plasticized polyvinyl acetal film is much preferred.

The current inventors have now surprisingly found that the use of cross-linked polyvinyl acetals with a medium to low molecular weight can solve the aforementioned problems. It can mitigate the problems associated with draw resonance while not compromising the safety features of laminated glass.

The invention therefore relates to a process for the production of a polyvinyl acetal film A by melt extrusion wherein the polyvinyl acetal has a molecular weight of the highest peak Mp from 50,000 to 125,000 g/mol as measured by GPC in THF according to the method described below and wherein the polyvinyl acetal is cross-linked.

The term "cross-linked" refers to a type of polymer material that has undergone a process called cross-linking or branching. In the context of this invention, cross-linking involves the formation of chemical bonds between polymer chains, creating a branched structure and is achieved by a chemical cross-linking agent. For the avoidance of doubt, "cross-linked" as referred to in this invention shall not mean formation of bonds between polymer chains which is caused by heat or catalysts during the normal formation of polyvinyl acetals without the addition of a cross linking agent.

Cross-linking agents according to the present invention are compounds with two or more functionalities. Examples of such cross-linking agents are polyfunctional aziridine, epoxides, isocyanates, silanes, and aldehydes. More preferably, a linear dialdehyde is used, most preferably glutaraldehyde.

Preferably, the crosslinking agents are used in amounts of 0.001 to 5 mol %, in particular 0.01 to 1 mol %, with respect to the total molar amount of the copolymerizable monomers employed.

*Brief description of the drawings*

Figure 1 is a plot of the Tensile Force F as a function of draw ratio DR showing the actual experimental data and the fit function used

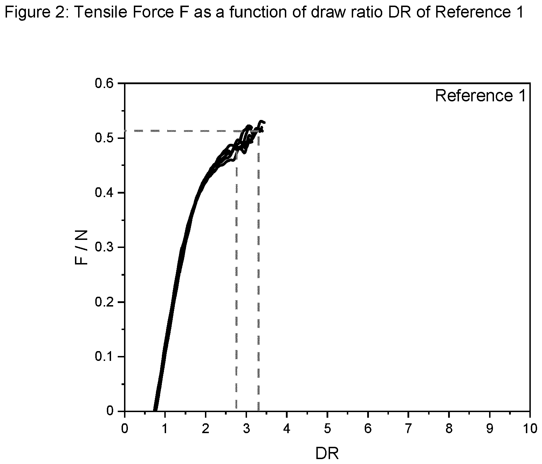

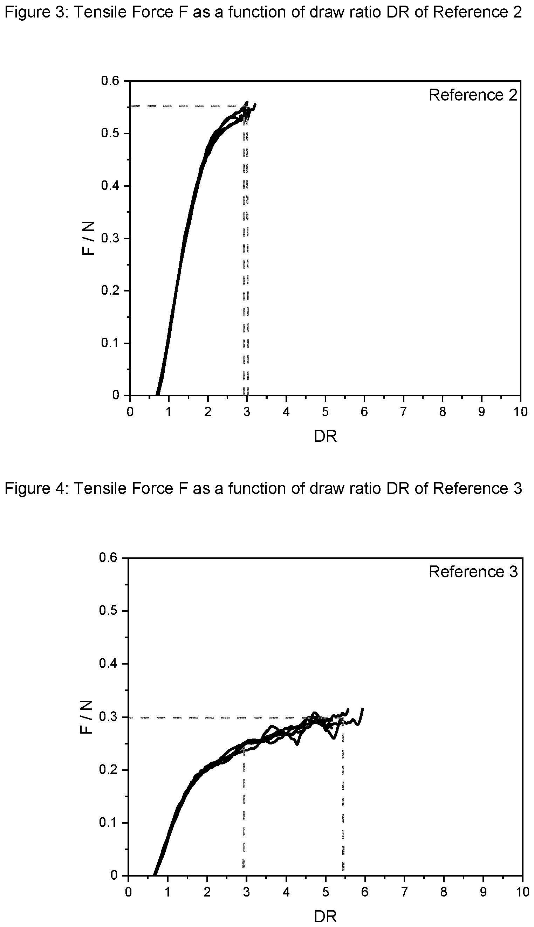

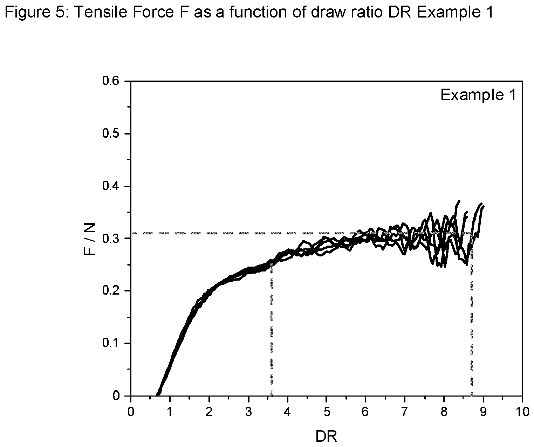

Figures 2 to 5 show a plot of the Tensile Force F as a function of draw ratio DR for the three references and example 1

Preferably, the polyvinyl acetal in film A has a molecular weight of the highest peak Mp from 75,000 to 100,000 g/mol, more preferably from 80,000 to 95,000 g/mol.

Also preferably, the polyvinyl acetal in film A has a weight average molecular weight Mw from 150,000 to 250,000 g/mol, more preferably from 175,000 to 225,000 g/mol.

The polyvinyl acetal in film A can either be a single polymer which is cross-linked and has a medium to low Mp. It can also consist of a blend of two or more polymers of which at least one is cross-linked with a higher Mp and one or more polymers of lower Mp values which may or may not be cross-linked.

Preferably, the polyvinyl acetal consists of a single polyvinyl acetal polymer.

Also preferably, the polyvinyl acetal comprises at least two different polyvinyl acetal polymers wherein a first polyvinyl acetal polymer is cross-linked and a second polyvinyl acetal is not cross-linked.

Also preferably, the first polyvinyl acetal polymer has a molecular weight of the highest peak Mp from 75,000 to 175,000 g/mol, more preferably from 100,000 to 150,000 g/mol, as measured by GPC in THF according to the method described in the description and the second polyvinyl acetal has a molecular weight of the highest peak Mp from 25,000 to 75,000 g/mol, preferably from 35,000 to 50,000 g/mol, as measured by GPC in THF according to the method described in the description.

Preferably, the thickness of a film A is 10 - 350 $\mu$m, preferably 10 - 150 $\mu$m and more preferably 20 - 50 $\mu$m.

Films A used in accordance with the invention may contain less than 10 % by weight, less than 8 % by weight, less than 6 % by weight, less than 4 % by weight, less than 3 % by weight, less than 2 % by weight, less than 1 % by weight or even no plasticiser (0.0 % by weight).

The current inventors have found that a high degree of polydispersity, i.e. a wide molar mass distribution appears to be beneficial for a low draw resonance. Accordingly, the polydispersity Mw/Mn of the polyvinyl acetal in film A is preferably equal to or higher than 3.0, more preferably equal to or higher than 3.25, most preferably equal to or higher than 3.5.

Preferably, the maximum draw ratio $DR_{max}$ of the polyvinyl acetal in film A measured according to the method described below is equal to more than 6, more preferably more than 7, even more preferably more than 8. Also preferably, the maximum draw ratio $DR_{max}$ of the polyvinyl acetal in film A is between 7 and 10.

Preferably, the melt strength Fms of the polyvinyl acetal in film A measured according to the method described below is equal to or more than 0.2 N.

Also preferably, the melt strength Fms of the polyvinyl acetal in film A measured according to the method described below is equal to or less than 0.4 N.

Another aspect of the present invention concerns a laminated glass comprising a stack of interlayer films comprising the polyvinyl acetal film A as describe herein and a polyvinyl acetal film B comprising plasticizer in a total amount of 16 to 60 % by mass based on a total mass of the resin composition sandwiched between two sheets of glass.

Such polyvinyl acetal films B, especially polyvinyl butyral films B are known in the art and can be obtained commercially, e.g. the Trosifol® product range available from Kuraray Europe GmbH.

The films A and B may contain, in the starting state prior to lamination of the layers and also in the intermediate layer stack located in the laminated glass laminate, a single plasticiser as well as mixtures of plasticisers both of different and identical composition.

Plasticiser-containing films B used in accordance with the invention contain at least 16 % by weight, such as 16.1 - 36.0 % by weight, preferably 22.0 - 32.0 % by weight and in particular 26.0 - 30.0 % by weight plasticiser.

The thickness of a film B is 450 - 2500 $\mu$m, preferably 600 - 1000 $\mu$m, preferably 700 - 900 $\mu$m.

The films can contain polyvinyl acetals, each having a different polyvinyl alcohol content, degree of acetalization, residual acetate content, ethylene proportion, molecular weight and/or different chain lengths of the aldehyde of the acetal groups.

The polyvinyl (n)acetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The films A or B preferably contain polyvinyl acetals having a proportion of polyvinyl acetate groups based on the layers, either identically or differently, of 0.1 to 20 mol %, preferably 0.5 to 3 mol %, or 5 to 8 mol %.

The polyvinyl alcohol content of the used polyvinyl acetals PA of film A having a lower plasticiser content in the starting state may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The polyvinyl alcohol content of the used polyvinyl acetals PB of film B, which is richer in plasticiser in the starting state, may be between 14 - 26 % by weight, 16 - 24 % by weight, 17 - 23 % by weight and preferably between 18 and 21 % by weight.

Films A and/or B used in accordance with the invention may contain, as plasticiser, one or more compounds selected from the following groups:

- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.

- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

In addition, films A and B may contain further additives, such as residual quantities of water, UV absorber, antioxidants, adhesion regulators, optical brighteners or fluorescent additives, stabilisers, colorants, processing aids, organic nanoparticles, pyrogenic silicic acid and/or surface active substances. In particular, film B may comprise 0.001 to 0.1 % by weight of alkaline salts and/or alkaline earth salts of carboxylic acids as adhesion regulators.

The films A or B preferably contain polyvinyl acetals having a proportion of polyvinyl acetate groups, either identically or differently, of 0.1 to 20 mol %, preferably 0.5 to 3 mol%, or 5 to 8 mol %.

The polyvinyl alcohol content of the polyvinyl acetal used in film A or B may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The polyvinyl alcohol content and proportion of polyvinyl acetate groups were determined in accordance with DIN ISO 3681 (Acetate content) and DIN ISO 53240 (PVA content).

In another embodiment, film A have a higher glass temperature $T_g$ (measured by DSC) than film B. Accordingly, glass temperature $T_g$ (measured by DSC) of film A is more than 5 °C, more than 10 °C or more than 15 °C higher than the glass temperature $T_g$ (measured by DSC) of film B.

Preferably, film A has a glass temperature $T_g$ (measured by DSC) higher than 25 °C, or higher than 30°C, or higher than 40 °C and most preferred higher than 50 °C.

To laminate the PVB films, the methods with which a person skilled in the art is familiar can be used with and without prior production of a pre-laminate.

What are known as autoclave processes are carried out at an increased pressure from approximately 10 to 15 bar and temperatures from 100 to 145 °C over approximately 2 hours. Vacuum bag or vacuum ring methods, for example according to EP 1 235 683 B1, function at approximately 200 mbar and 130 to 145 °C.

What are known as vacuum laminators can also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

**Experimental Part**

*Reference 1 - high Mw, not cross-linked*

100 parts by weight of a polyvinyl alcohol with a viscosity of 26 mPas (4 w/w % in aqueous solution, measured according to DIN 53015 at 20 °C) and a degree of hydrolysis of 99.0 mol % were dissolved in 1000 parts by weight of water with heating to 90 °C. At a temperature of 40 °C, 56 parts by weight of n-butyraldehyde and at a temperature of 12 °C, 100 parts by weight of 20 w/w % hydrochloric acid were added with stirring. The mixture was heated to 40 °C. After the polyvinyl butyral (PVB) had precipitated, the mixture was stirred at this temperature for 48 hours. The PVB was separated after cooling to room temperature, washed with water to neutrality (pH = 7) and dried. A PVB with a polyvinyl alcohol content of 19.3 % by weight (27.9 mol %) and a polyvinyl acetate content of 1.0 % by weight (0.7 mol %) was obtained.

*Reference 2 - high Mw, crosslinked*

100 parts by weight of a polyvinyl alcohol with a viscosity of 26.9 mPas (4 w/w % in aqueous solution, measured according to DIN 53015 at 20 °C) and a degree of hydrolysis of 99.0 mol % were dissolved in 1087 parts by weight of water with heating to 90 °C. At a temperature of 40 °C, 57.5 parts by weight of n-butyraldehyde and 0.013 parts by weight of glutaraldehyde were added. At a temperature of 12 °C, 75 parts by weight of 20 w/w % hydrochloric acid were added with stirring. After 15 minutes the mixture was heated to 73 °C and was stirred at this temperature for 60 minutes. The PVB was separated after cooling to room temperature, washed with water to neutrality (pH = 7) and dried. A PVB with a polyvinyl alcohol content of 20.3 % (29.2mol %) by weight and a polyvinyl acetate content of 1.0 % by weight (0.7 mol %) was obtained.

Reference 3 - low Mw, not cross-linked

100 parts by weight of a polyvinyl alcohol with a viscosity of 4 mPas (4 w/w % in aqueous solution, measured according to DIN 53015 at 20 °C) and a degree of hydrolysis of 98.5 mol % were dissolved in 1000 parts by weight of water with heating to 90 °C. At a temperature of 40 °C, 56 parts by weight of n-butyraldehyde and at a temperature of 4 °C, 100 parts by weight of 20 w/w % hydrochloric acid were added with stirring. The mixture was heated to 40 °C. After the polyvinyl butyral (PVB) had precipitated, the mixture was stirred at this temperature for 48 hours. The PVB was separated after cooling to room temperature, washed with water to neutrality (pH = 7) and dried. A PVB with a polyvinyl alcohol content of 19.3 % by weight (27.9 mol %) and a polyvinyl acetate content of 1.9 % by weight (1.4 mol %) was obtained. This resin was used to prepare a mixture of 55 parts by weight from Reference 1 and 45 parts by weight of the resin described in this experiment.

*Example 1 - low Mw, crosslinked*

Example 1 is a mixture of 55 parts by weight from Reference 2 and 45 parts by weight of the polymer prepared as described in of Reference 3.

*Method to determine the molecular weight*

Size exclusion chromatography was used to determine the molecular weight using the following conditions. THF was used as solvent for sample preparation and as eluent. The sample concentration was adjusted to 10 mg/mL by dissolving 50 mg PVB resin in 5 mL THF and shaking at 25 °C for 15 min. The injection volume used was 50 $\mu$L and the flow rate was set to 1 mL/min using an HPLC pump. The temperature used was set to 40°C. An SDV Guard (50 x 8 mm, 5$\mu$m particles) from PSS was used as a precolumn, followed by a combination of the following three columns: 1. PSS SDV 100 Å 300x8 mm (5 $\mu$m particles), 2. PSS SDV 1,000 Å 300x8 mm (5 $\mu$m particles), 3. PSS SDV 100,000 Å 300x8 mm (5$\mu$m particles). Detection was performed using an RI detector (RID; Agilent G7162A). A corresponding calibration curve was used to calculate the molecular weight of PVB resin based on various PMMA standards in the range of 2,200 to 2,700,000 g/mol.

The peak evaluation in the SEC measurements was conducted within the boundaries of 2.5% of the maximum normalized detector signal. The maximum detector value of a peak was set to 100% and integration was performed only up to 2.5% intensity on both sides of the signal. Consequently, the outer edges of the signal were truncated to ensure precise and reproducible evaluation.

*Results of the Molecular Weight Measurements (in g/mol)*

|             | Mn     | Mw      | Mw/Mn | Mp      |
|-------------|--------|---------|-------|---------|
| Reference 1 | 98,100 | 269,000 | 2.87  | 133,000 |
| Reference 2 | 93,600 | 265,000 | 2.70  | 138,000 |
| Reference 3 | 47,000 | 165,000 | 3.50  | 79,500  |
| Example 1   | 52,300 | 198,000 | 3.78  | 89,900  |

*Compounding*

The resin blends were obtained by compounding using a double screw extruder with a screw diameter of 18 mm and a LID ration of 32. The barrel temperature was set to 220 °C and the die temperature to 240 °C. A circular die with a diameter of 4.5 mm was used. The polymer strand was quenched in a water and afterwards pelletized using a granulator. In order to obtain the same thermal history, the single polymers were also extruded, applying the same process.

*Rheotens Experiments*

The elongational properties of the polymer melt were measured with a Rheotens 71.97, commercially available from Göttfert Werkstoff-Prüfmaschinen GmbH, Germany. A X-trude 300 (Göttfert Werkstoff-Prüfmaschinen GmbH, Germany) single screw lab extruder with a melt pump was used as a melt source. The temperature of the extruder barrel was set to 190 °C and the rotation speed of the melt pump was adapted to obtain a constant throughput of 0.5 kg/h for all materials investigated.

A circular die with a diameter of 2 mm and a length of 30 mm was used and the strand length between the die and the wheels of the Rheotens was set to 100 mm. The initial speed of the wheels was adopted to the speed of the polymer strand for each material investigated to obtain a force at the wheels close to 0 N before stating the experiment. The acceleration of the wheels was set to 30 mm/s$^2$ and the experiment was conducted until the breakage of the polymer strand.

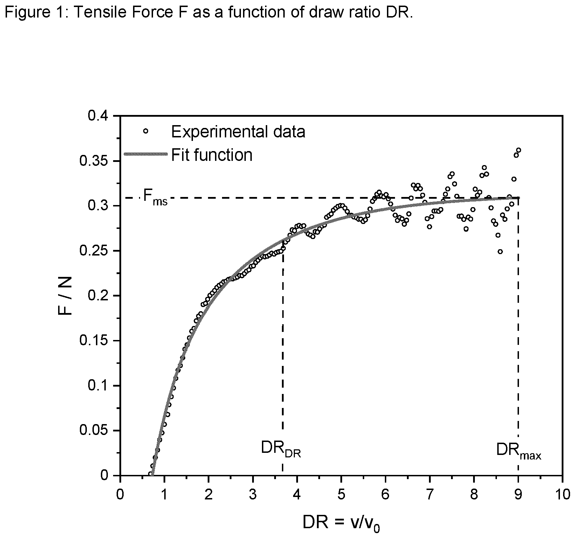

For graphical representation of the results, the tensile force is plotted as a function of the draw ratio DR, which is defined as the speed of the wheels v divided by the speed of the polymer strand at the die outlet $v_0$ (cf. Figure 1). An asymptotic fit function is used to assess the melt strength Fms and the maximum draw ratio $DR_{max}$. The starting point of the draw resonance $DR_{DR}$ is assed visually (cf. Figure 1).

The data in Table 1 represent the average of five single measurements of each polymer and the corresponding standard deviation.

Table 1: Results of the Draw Resonance Measurements

| Parameter | Reference 1 | Reference 2 | Reference 3 | Example 1 |
|---|---|---|---|---|
| $F_{ms}$ / N | 0.513 ± 0.006 | 0.552 ± 0.007 | 0.299 ± 0.004 | 0.309 ± 0.006 |
| $DR_{max}$ | 3.31 ± 0.15 | 3.03 ± 0.11 | 5.45 ± 0.33 | 8.72 ± 0.26 |
| $DR_{DR}$ | 2.77 ± 0.15 | 2.94 ± 0.05 | 2.93 ± 0.44 | 3.60 ± 0.27 |

The following definitions are used throughout this specification:

Number average molecular weight (Mn): The number average molecular weight is the statistical average molecular weight of all the polymer chains in the sample, and is defined by:

$$Mn = \frac{\Sigma N_i M_i}{\Sigma N_i}$$

where Mi is the molecular weight of a chain and Ni is the number of chains of that molecular weight.

The weight average molecular weight is defined by:

$$Mw = \frac{\Sigma N_i M_i^2}{\Sigma N_i M_i}$$

Compared to Mn, Mw takes into account the molecular weight of a chain in determining contributions to the molecular weight average.

Mp is the molecular weight of the highest peak of the GPC curve.

**Claims**

1. A process for the production of a polyvinyl acetal film A by melt extrusion

   - wherein the polyvinyl acetal has a molecular weight of the highest peak Mp from 50,000 to 125,000 g/mol as measured by GPC in THF according to the method described in the description and
   - wherein the polyvinyl acetal is cross-linked.

2. The process according to claim 1 wherein the polyvinyl acetal consists of a single polyvinyl acetal polymer.

3. The process according to claim 1 or 2 wherein the polyvinyl acetal comprises at least two different polyvinyl acetal polymers and wherein a first polyvinyl acetal polymer is cross-linked and a second polyvinyl acetal is not cross-linked.

4. The process according to claim 3 wherein the first polyvinyl acetal polymer has a molecular weight of the highest peak Mp from 75,000 to 175,000 g/mol as measured by GPC in THF according to the method described in the description and the second polyvinyl acetal has a molecular weight of the highest peak Mp from 25,000 to 75,000 g/mol as measured by GPC in THF according to the method described in the description.

5. The process according to any one of the claims above wherein the polyvinyl acetal film A comprises plasticizer in a total amount of 0 to 10% by mass based on a total mass of the resin composition.

6. The process according to any one of the claims above wherein the polyvinyl acetal film A has a thickness of 10 to 350 $\mu$m.

7. The process according to any one of the claims above wherein the polyvinyl acetal is cross-linked by means of a linear dialdehyde.

8. The process according to any one of the claims above wherein the polyvinyl acetal in film A has weight average molecular weight Mw from 150,000 to 250,000 g/mol.

9. The process according to any one of the claims above wherein the polydispersity Mw/Mn of the polyvinyl acetal in film A is equal to or higher than 3.0.

10. A polyvinyl acetal film A according to any one of the claims above wherein the polyvinyl acetal in film A has a molecular weight of the highest peak Mp from 50,000 to 125,000 g/mol as measured by GPC in THF according to the method described in the description and wherein the polyvinyl acetal is cross-linked.

11. The polyvinyl acetal film A according to claim 10 wherein the polyvinyl acetal comprises at least two different polyvinyl acetal polymers and wherein a first polyvinyl acetal polymer is cross-linked and a second polyvinyl acetal is not cross-linked.

12. The polyvinyl acetal film A according to claim 10 or 11 wherein the polyvinyl acetal film A comprises plasticizer in a total amount of 0 to 10% by mass based on a total mass of the resin composition and the polyvinyl acetal film A has a thickness of 10 to 350 $\mu$m .

13. The polyvinyl acetal film A according to any one of claims 10 to 12 wherein the polydispersity Mw/Mn of the polyvinyl acetal in film A is equal to or higher than 3.0.

14. The polyvinyl acetal film A according to any one of the claims above wherein the polyvinyl acetal is polyvinyl butyral.

15. A laminated glass comprising a stack of interlayer films comprising the polyvinyl acetal film A according to any one of claims 10 to 14 and a polyvinyl acetal film B comprising plasticizer in a total amount of 16 to 60 % by mass based on a total mass of the resin composition sandwiched between two sheets of glass.

Figure 1: Tensile Force F as a function of draw ratio DR.

Figure 2: Tensile Force F as a function of draw ratio DR of Reference 1

Figure 3: Tensile Force F as a function of draw ratio DR of Reference 2

Figure 4: Tensile Force F as a function of draw ratio DR of Reference 3

Figure 5: Tensile Force F as a function of draw ratio DR Example 1

**EP 4 613 798 A1**

Europäisches
Patentamt
European
Patent Office
Office européen
des brevets

## EUROPEAN SEARCH REPORT

**Application Number**

EP 24 16 2427

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 587 460 B1 (KURARAY CO [JP]) 5 April 2023 (2023-04-05) * paragraphs [0045], [0166], [0287] - [0290]; example 1; table 1 * | 1,2,5,6, 10,12 | INV. C08J5/18 C08L29/14 |
| X | US 2022/010082 A1 (ISOUE KOICHIRO [JP]) 13 January 2022 (2022-01-13) | 1,3-6, 8-13,15 | |
| Y | * paragraphs [0199], [0235]; tables 1,2 * | 7,14 | |
| A | US 2005/054772 A1 (PAPENFUHS BERND [DE] ET AL) 10 March 2005 (2005-03-10) * claim 4 * | 1-15 | |
| Y | EP 0 211 818 A1 (MONSANTO CO [US]) 25 February 1987 (1987-02-25) * claims; examples * | 7,14 | |

TECHNICAL FIELDS
SEARCHED (IPC)

C08J
C09J
B32B
B29C
C08L

The present search report has been drawn up for all claims

| Place of search | Date of completion of the search | Examiner |
|---|---|---|
| Munich | 25 July 2024 | Frison, Céline |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                     EP 24 16 2427

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2024

| Patent document cited in search report | | Publication date | Patent family member(s) | Publication date |
|---|---|---|---|---|
| EP 3587460 | B1 | 05-04-2023 | BR 112017000444 A2 | 07-11-2017 |
| | | | CN 106795232 A | 31-05-2017 |
| | | | EP 3168242 A1 | 17-05-2017 |
| | | | EP 3587460 A1 | 01-01-2020 |
| | | | KR 20170029597 A | 15-03-2017 |
| | | | MY 179585 A | 11-11-2020 |
| | | | SG 11201700230Y A | 27-02-2017 |
| | | | TW 201615674 A | 01-05-2016 |
| | | | US 2017183426 A1 | 29-06-2017 |
| | | | WO 2016006694 A1 | 14-01-2016 |
| US 2022010082 | A1 | 13-01-2022 | CN 112789312 A | 11-05-2021 |
| | | | EP 3858901 A1 | 04-08-2021 |
| | | | JP WO2020067082 A1 | 24-09-2021 |
| | | | KR 20210064228 A | 02-06-2021 |
| | | | US 2022010082 A1 | 13-01-2022 |
| | | | WO 2020067082 A1 | 02-04-2020 |
| US 2005054772 | A1 | 10-03-2005 | BR 0212121 A | 20-07-2004 |
| | | | CN 1551890 A | 01-12-2004 |
| | | | DE 10143190 A1 | 20-03-2003 |
| | | | EP 1432742 A1 | 30-06-2004 |
| | | | JP 4405799 B2 | 27-01-2010 |
| | | | JP 2005501937 A | 20-01-2005 |
| | | | KR 20040029064 A | 03-04-2004 |
| | | | MX PA04002057 A | 07-06-2004 |
| | | | RU 2301234 C2 | 20-06-2007 |
| | | | US 2005054772 A1 | 10-03-2005 |
| | | | WO 03020776 A1 | 13-03-2003 |
| EP 0211818 | A1 | 25-02-1987 | AT E64401 T1 | 15-06-1991 |
| | | | AU 581092 B2 | 09-02-1989 |
| | | | CA 1276744 C | 20-11-1990 |
| | | | EP 0211818 A1 | 25-02-1987 |
| | | | JP 2523282 B2 | 07-08-1996 |
| | | | JP 2594243 B2 | 26-03-1997 |
| | | | JP S6210106 A | 19-01-1987 |
| | | | JP H08231639 A | 10-09-1996 |
| | | | MX 165554 B | 23-11-1992 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210078299 A1

- EP 1235683 B1